# EUROPEAN PATENT APPLICATION

(11) **EP 0 998 849 A1**
(43) Date of publication of application: **10.05.2000**
(21) Application number: 99203574.1
(22) Date of filing: 29.10.1999
(51) Int. Cl.: A01G 31/02, A47G 7/04

(54) **Device for cultivating plants**

(30) Priority: 02.11.1998 NL 1010445
(71) Applicant: Delisse, Willem Jozef, NL-5469 ST Erp (NL)
(72) Inventor: Delisse, Willem Jozef, NL-5469 ST Erp (NL)
(74) Representative: Vollebregt, Cornelis Jacobus, Ir.

(57) **Abstract**

The present invention relates to a device for raising plants, comprising an elongated gutter (1) with a bottom (2) and upright walls (4) and a plant container (6) disposed in the gutter (1). At least one bracket (13) is connected with the container (6), which bracket (13) is provided with a hook-shaped part (12) at the end remote from the container, which hook-shaped part (12) engages an upper edge (5) of an upright wall (4) of the gutter (1). The container (6) is provided with a bracket (13) on two opposite sides, which brackets (13) each engage over one of two opposed upright walls (4) of the gutter (1).

## Description

The invention relates to a device for cultivating plants, comprising an elongated gutter having a bottom and upright walls and plant containers disposed in the gutter.

Devices of this kind are for example known from British patent No. 1,527,693 and US patent No. 5,409,510.

Gutters of this kind have been used in horticulture for years, whereby the gutters are used for supplying water that may be enriched with nutrients.

An application of this kind is also described in the magazine "Groenten en Fruit", 16 October 1998, pp. 20 - 22.

Stems of plants that have been present in the gutter for a longer period of time already may thereby be guided over the upper edges of the upright walls of the gutter, in such a manner that said stems can extend to below the gutter. After containers which contain plants that no longer grow have been removed, new containers, in which young plants may be present, can be placed between the containers which contain plants that are to a certain extent fully grown. This system can in particular be used in tomato cultivation, for example, where it is not an objection that fruits which are in part fully grown are present on plant portions hanging below the gutter during a last phase, even if slightly less light may be available at that location than near the upper side of the gutter.

The possible exchange of containers with old plants for containers with new plants enables a continuous cultivation of plants, as it were.

One problem that occurs with the devices that are known so far, however, is the fact that the containers exhibit a tendency to tilt, in particular if they are placed on a substrate layer, and/or due to the presence of discharge channels for excess water in the gutter, especially if plant stalks or the like hang outside the gutter.

Such tilting of the container may cause damage to the plants and thus result in a decline in the production of products to be harvested, with all its negative consequences.

The object of the invention is to obtain a device of the above kind, wherein this drawback of the prior art devices can be overcome.

According to the invention this objective can be accomplished in that at least one bracket is connected with the container, which bracket is provided with a hook-shaped part at the end remote from the container, which hook-shaped part engages an upper edge of an upright wall of the gutter.

By using the construction according to the invention, the containers can be prevented from tilting or shifting in a simple manner.

Preferably, the container will be provided with two brackets disposed on opposite sides of the container, which brackets are capable of engaging the upper edges of opposed upright walls of the gutter.

According to another aspect of the invention, a container is used which is provided with a cover on the upper side, which cover has one or more closable openings.

Said opening(s) is (are) intended for passing therethrough the tendrils or the like of the plants to be raised. By closing the upper side of the container at least partially with the cover, however, dehydration and the occurrence of infections are prevented.

The invention will be explained in more detail hereafter by means of a possible embodiment of the device and the container according to the invention as shown in the accompanying figures.
Figure 1 is a cross-sectional view of a gutter.
Figure 2 is a cross-sectional view of a container.
Figure 3 is a view of a bracket.
Figure 4 is a side view of the bracket of Figure 3.
Figure 5 is a top plan view of a cover suitable for closing a container on the upper side thereof.
Figure 6 is a bottom plan view of the container of Figure 2.

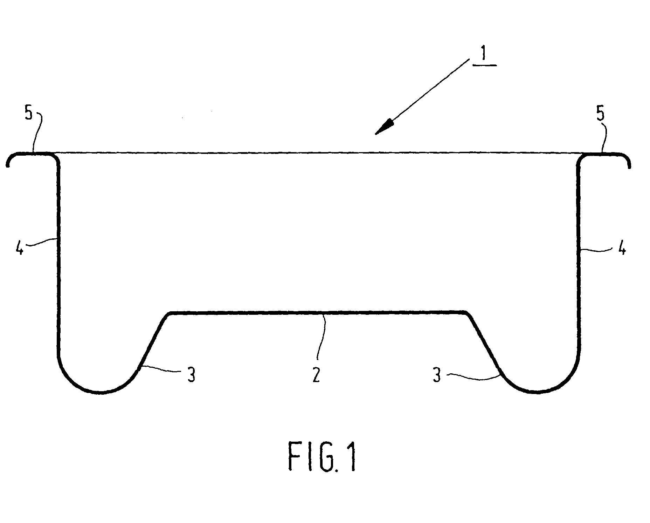

Figure 1 shows in sectional view a conventional gutter 1, which comprises a flat bottom 2, which blends with recessed channel portions 3 at its longitudinal edges. Upwardly extending side walls 4 of the gutter join the ends of channel portions 3 remote from the bottom 2. The side walls are provided with outwardly bent flanges 5 at their upper ends.

Of course other gutter configurations are possible within the spirit and scope of the invention.

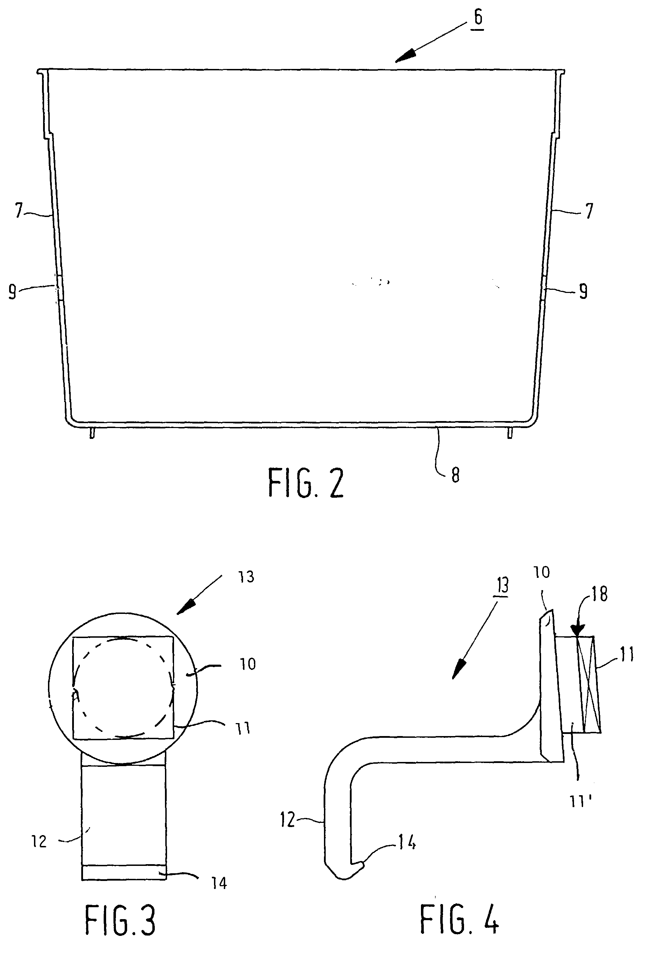

The gutter is intended for receiving containers 6, for example of the type which is shown in Figure 2. Said container 6 is of substantially rectangular section and comprises a bottom 8 and four upright walls 7, which extend upwards from bottom 1, in a direction away from each other, with a slight slope in the illustrated embodiment.

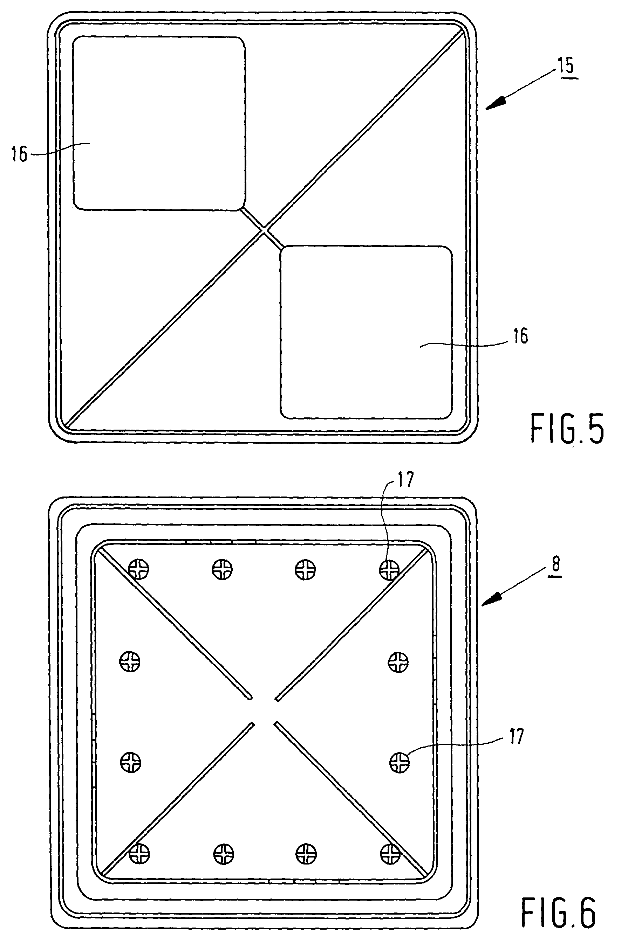

As is furthermore shown in Figure 6, openings 17 may be formed in the bottom 8 of the container in a usual manner to allow water to pass therethrough.

The bracket 13 which is shown in Figures 3 and 4 is used for securing a container, which may be present on the bottom 2 or on a substrate mat or the like resting on said bottom 2, in position in the gutter. Said bracket 13 includes a plate-shaped part 10. An L-shaped arm or hook-shaped part 12 joins said plate-shaped part 10 on one side of said plate-shaped part 10. L-shaped arm 12 is provided with a projecting nose 14 at its free end.

A projection 18, which is built up of two parts 11 and 11', joins the side of plate-shaped part 10 remote from arm 12. The part 11' of the projection 18 that joins the plate-shaped part directly is of circular section, whilst the part 11 of the projection that joins the end of part 11' remote from plate-shaped part 10 is of square section, all this in such a manner that the corners of the square part project beyond the circumference of circular part 11, forming some kind of cams, as will be apparent from Figure 3.

Preferably, a square recess 9 is formed in at least one of the upright walls, preferably in two upright walls 7 disposed opposite each other, with a view to connecting a bracket 13 to a container 6, in such a manner that two diagonally opposed corner points of the recess 9, lie on a line extending perpendicularly to the plane of the drawing, seen in Figure 2, whilst the other two diagonally opposed corner points lie on a line extending in the plane of the drawing, seen in Figure 2.

It will be understood that part 11 of projection 18 can be passed through hole 9 when the bracket 13 has been turned through 45° relative to the position which is shown in Figure 3.

Once part 11 of the projection has been passed through the hole 9 formed in wall 7, and circular part 11' of the projection 18 is present in hole 9, bracket 13 can be turned back again. The wall 7 in question will then be retained between plate-shaped part 10 and the cam-forming portions of part 11, which project beyond part 11'.

When a container 6 provided with such a bracket is placed into gutter 1, the horizontally extending part of arm 12, seen in Figure 4, will extend over a flange 5 of gutter 1, and nose 14 will engage under the outer edge of flange 5.

By connecting container 6 to the gutter by means of bracket 13 in this manner, the container can be prevented from tilting and/or shifting undesirably with respect to the gutter.

Preferably, such a bracket 13 is connected to each one of a pair of opposed upright walls 7 of container 6, whereby said brackets will engage over the flanges 5 of the opposed upright walls 4 of the gutter.

It is possible to connect more than one bracket to each upright wall 7 of a container, if desired.

Figure 5 furthermore shows a schematic top plan view of a cover 15, which cover may be clamped down on the upper edges of the upright walls 7 of container 6.

The cover is provided with one or more openings, which are closed by means of removable segments 16. Removing one segment, or both, makes it possible to place one or more seedlings or the like into growth material present in the container, such as for example coco fibres and/or perlite granules.

When placing two seedlings or the like, it is advantageous when the segments 16 are disposed diagonally opposite each other, as a result of which a favourable distribution of the weight of the growth material present in the container and the seedlings, plants or the like present therein can be effected.

It will be understood that although the figures show containers of rectangular section, it is also possible to implement the invention with containers having a different sectional shape.

## Claims

1. A device for raising plants, comprising an elongated gutter with a bottom and upright walls and a plant container disposed in the gutter, characterized in that at least one bracket is connected with the container, which bracket is provided with a hook-shaped part at the end remote from the container, which hook-shaped part engages an upper edge of an upright wall of the gutter.

2. A device according to claim 1, characterized in that the container is provided with a bracket on two opposite sides, which brackets each engage over one of two opposed upright walls of the gutter.

3. A device according to claim 2, characterized in that upright walls of the gutter are provided with substantially horizontally extending flanges, and in that said bracket includes a portion extending over an edge of the gutter and a nose which engages under said flange.

4. A device according to any one of the preceding claims, characterized in that said bracket is provided with a projecting part, which engages in an opening formed in the wall of the container.

5. A device according to any one of the preceding claims, characterized in that said projecting part includes a portion of circular section, to the free end of which an unround portion connects, which unround portion projects at least partially beyond the portion of circular section, whilst one wall of the container is provided with an opening whose shape substantially corresponds to the sectional shape of said unround portion.

6. A bracket obviously intended for use in a device according to any one of the preceding claims.

7. A container obviously intended for use in a device according to any one of the preceding claims 1 - 5.

8. A container for raising plants, comprising a cover including at least one removable segment which closes an opening in the cover.
